# EUROPÄISCHE PATENTANMELDUNG

(11) **EP 0 660 557 A1**
(43) Veröffentlichungstag der Anmeldung: **28.06.1995**
(21) Anmeldenummer: 93120828.4
(22) Anmeldetag: 23.12.1993
(51) Int. Cl.: H04J 3/16, H04Q 11/04

(54) **Verfahren zum statistischen Multiplexen**

(71) Anmelder: SIEMENS AKTIENGESELLSCHAFT, D-80333 München (DE)
(72) Erfinder: Wallmeier, Eugen, Dr. rer. nat., D-82223 Eichenau (DE)

(57) **Zusammenfassung**

Es wird ein Verfahren zum statistischen Multiplexen vorgeschlagen, bei dem nach einem asynchronen Übertragungsverfahren (Asynchronous Transfer Mode) übertragene Nachrichtenzellen auf Eingangsleitungen einem Multiplexer zugeführt und auf einer Ausgangsleitung weitergeleitet werden. Das Verfahren, bei dem für jede Verbindung eine mittlere Nachrichtenzellenrate und eine Maximalzahl von die mittlere Nachrichtenzellenrate kurzfristig überschreitenden Nachrichtenzellen reserviert ist, stellt für jede Verbindung eine minimal so große Nachrichtenzellenrate wie die mittlere Nachrichtenzellenrate bei einer begrenzten Verzögerungsdauer sicher.

## Beschreibung

Die Erfindung betrifft ein Verfahren zum statistischen Multiplexen von Nachrichtenzellen
in einer Anordnung,
- bei der eine Mehrzahl von Eingangsleitungen und eine Ausgangsleitung gegeben sind,
- demzufolge ein Nachrichtenzellenzyklus durch die Übertragungsdauer einer Nachrichtenzelle bei einer festgelegten Übertragungsbitrate gegeben ist
- demzufolge Nachrichtenzellen konstanter Länge im Zuge von virtuellen Verbindungen nach einem asynchronen Übertragungsverfahren übertragen werden
- demzufolge in jedem Nachrichtenzellenzyklus auf den Eingangsleitungen eine Mehrzahl von Nachrichtenzellen herangeführt werden können und höchstens eine Nachrichtenzelle auf die Ausgangsleitung weitergeleitet werden kann
- demzufolge für jede virtuelle Verbindung eine minimale Nachrichtenzellenübertragungsrate und eine Maximalzahl von die Nachrichtenzellenübertragungsrate überschreitenden Nachrichtenzellen eingerichtet werden.

Die Teilnehmer von Kommunikationssystemen, die von dem Übertragungsprinzip des statistischen Multiplexens Gebrauch machen, stellen Anforderungen an Leistungskriterien wie Verlustwahrscheinlichkeit und Verzögerung. Diese Anforderungen können beispielsweise dadurch erfüllt werden, daß für jede Verbindung eine Bitratenreservierung vorgenommen wird, die der Spitzenbitrate der Verbindung gleicht. Diese Spitzenbitratenreservierung arbeitet bekanntlich nur dann effektiv, wenn die Spitzenbitraten der einzelnen Verbindungen jeweils lediglich einen kleinen Bruchteil der gesamten Übertragungsbitrate der Verbindungsstrecke betragen.

Auf dem Telecommunications Standardization Sector, Study Group 13, Working Party, Geneva, July 1993 ist ein Dokument mit dem Titel "Resource allocation using sustainable cell rate and burst tolerance traffic parameters" vorgestellt worden, in dem ein neuer Algorithmus angegeben ist. Dieser Algorithmus gründet auf der Vereinbarung einer mittleren Nachrichtenzellenrate und einer Maximalzahl von die mittlere Übertragungsrate kurzzeitig überschreitenden Nachrichtenzellen. Wesentlich für diesen Algorithmus ist, daß für jede Verbindung eine begrenzte Anzahl von Speicherplätzen vorzuhalten ist. Darüberhinaus stellt dieser Algorithmus für jede Verbindung eine minimale Nachrichtenzellenrate sicher, die mindestens so groß ist, wie die für die jeweilige Verbindung reservierte mittlere Nachrichtenzellenrate. Darüberhinaus ist bei diesem Algorithmus die maximale Verzögerungsdauer einer Nachrichtenzelle durch das Verhältnis der Maximalzahl von die mittlere Nachrichtenzellenrate überschreitenden Nachrichtenzellen zu der mittleren Nachrichtenzellenrate begrenzt.

Gemäß der in dem Dokument gegebenen Einschätzung ist eine technische Realisierung dieses Algorithmus nicht möglich.

Der Erfindung liegt das Problem zugrunde, eine technische Realisierung für den genannten Algorithmus anzugeben.

Das Problem wird dadurch gelöst, daß
- in der Anordnung eine Speichereinrichtung mit einer Vielzahl von jeweils eine Nachrichtenzelle aufnehmenden Speicherplätzen gegeben ist,
- bei der eine mit einer Vielzahl von Speicherelementen gebildete Zeitachse gegeben ist, die durch einen Zeitzeiger mit jedem Nachrichtenzellenzyklus fortschreitend zyklisch angesteuert wird
- demzufolge für jede ankommende Nachrichtenzelle unter Auswertung der für die zugehörige virtuelle Verbindung eingerichteten Größen ein Zeitrang bestimmt wird, der angibt, bis zu welchem spätest zuläßigen Zeitpunkt diese Nachrichtenzelle weitergeleitet werden muß
- demzufolge eine Nachrichtenzelle in einem Speicherplatz abgespeichert wird und die Adresse dieses Speicherplatzes in dem Speicherelement der Zeitachse abgespeichert wird, das dem zugehörigen Zeitrang entspricht
- demzufolge für den Fall, daß in einem durch den Zeitzeiger angesteuerten Speicherelement ein Eintrag auf den Speicherplatz einer Nachrichtenzelle verweist, diese Nachrichtenzelle für eine unmittelbare Weiterleitung auf die Ausgangsleitung in eine Ausleseliste eingetragen wird
- demzufolge für den Fall, daß in dem augenblicklichen Nachrichtenzellenzyklus keine Nachrichtenzelle in die Ausleseliste eingetragen ist ein Lesezeiger in der Zeitachse bis zu dem Eintrag für eine Nachrichtenzelle mit dem nächstfolgenden Zeitrang fortschreitet und eine Eintragung nur der einen Nachrichtenzelle in die Ausleseliste bewirkt
- demzufolge für den Fall, daß für eine ankommende Nachrichtenzelle ein Zeitrang ermittelt wird, der zwischen den augenblicklichen Positionen des Zeitzeigers und des Lesezeigers liegt, diese Nachrichtenzelle unmittelbar in die Ausleseliste eingetragen wird.

Die Erfindung realisiert einen Algorithmus, der für jede Verbindung die reservierte Nachrichtenzellenrate bei einer maximalen Verzögerungsdauer sicherstellt, wobei die Anzahl für die einzelnen Verbindungen bereitzustellender Speicherplätze begrenzt ist. Für den Fall, daß die Ankunftszeiten von aufeinanderfolgenden Nachrichtenzellen einer Verbindung niemals unter dem Inversen der mittleren Nachrichtenzellenrate beträgt, verlassen alle Nachrichtenzellen der Verbindung die Ausleseliste in dem Nachrichtenzellenzyklus, in dem sie ankommen. Für den Fall, daß die mittlere Nachrichtenzellenrate einer Verbindung gleich der Spitzen-Nachrichtenzellenrate gewählt wird, erfahren die dieser Verbindung zugehörigen Nachrichtenzellen keine höhere Verzögerung, als in einer Anordnung mit Spitzen-Bitratenreservierung. Bei der erfindungsgemäßen Anordnung ist die Anzahl der von einer Verbindung belegbaren Speicherplätze durch einen Leaky Bucket begrenzt, der die Einhaltung der mittleren Nachrichtenzellenrate überwacht. Somit ist eine Überflutung der Speicherplätze mit Nachrichtenzellen einer Verbindung, die ihre mittleren Nachrichtenzellenrate nachhaltig überschreitet, ausgeschlossen.Weitere Vorteile sind darin zu sehen, daß zum einen eine Überholung von priorisierten - da z.B.zeitkritischen Verbindungen zugehörigen - Nachrichtenzellen möglich ist und zum anderen eine Beeinträchtigung der übrigen Verbindungen durch eine Verbindung, die die für sie eingerichteten Parameter überschreitet, ausgeschlossen ist. Darüberhinaus ist für ein effektives statistisches Multiplexen keine Beschränkung des Anteils von der Nachrichtenzellenrate einer einzelnen Verbindung zu der gesamten Nachrichtenzellenrate der Ausgangsleitung gegeben.

Die weiteren Ansprüche betreffen vorteilhafte Ausgestaltungen des Anmeldungsgegenstandes.

Die Erfindung wird nun als Ausführungsbeispiel in einem zum Verständnis erforderlichen Umfang anhand von Figuren näher beschrieben.

Dabei zeigen:
- Fig 1: die prinzipielle Darstellung einer Multiplexeinrichtung
- Fig 2: die prinzipielle Darstellung einer Vermittlungseinrichtung
- Fig 3: die prinzipielle Darstellung einer Einrichtung für eine Warteschlange
- Fig 4: das Struktogramm einer Leaky-Bucket-Procedur
- Fig 5: nähere Einzelheiten des in Fig 3 mit CBM bezeichneten Blockes.

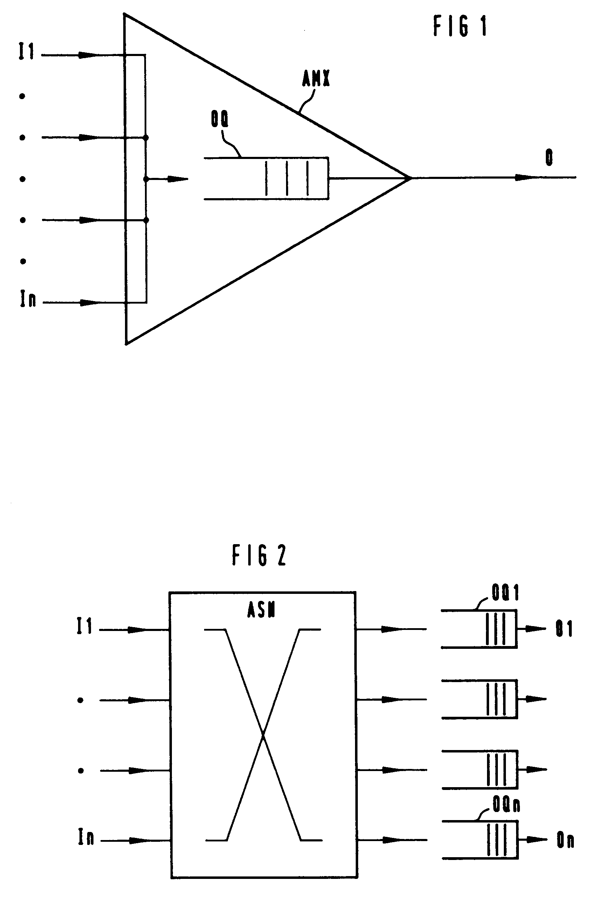

Die Multiplexeinrichtung AMX (für: Asynchronous Multiplexer) nach Fig 1 vermag Nachrichtenzellen, die auf mit den Eingängen I1..In (für: Input) verbundenen Eingangsleitungen ankommen, auf eine mit dem Ausgang O (für: Output) verbundene Ausgangsleitung durchzuschalten. Dem Ausgang ist ein Wartespeicher OQ (für: Output Queue) zugeordnet.

Die Nachrichtenzellen mögen durch im Zuge von virtuellen Verbindungen VC (für: Virtual Connection) nach einem asynchronen Übertragungsverfahren, beispielsweise dem ATM (Asynchronous Transfer Mode) Verfahren, übertragene Nachrichtenzellen fester Länge gegeben sein. Jede Nachrichtenzelle weist einen Nutzdatenteil mit einer Länge von beispielsweise 48 Oktetts und einen diesem vorangestellten Nachrichtenzellenkopf mit einer Länge von beispielsweise 5 Oktetts auf. In dem Nachrichtenzellenkopf wird eine Zielinformation (Virtual Path Identifier/Virtual Channel Identifier) mitgeführt, die die zugehörige virtuelle Verbindung bezeichnet.In dem Nutzdatenteil erfolgt die Übertragung der eigentlichen Nachrichtensignale. Unter Nachrichtensignalen sollen dabei Nachrichten- und Textsignale sowie Sprach- bzw. Bildsignale in digitaler Form verstanden werden. In Übertragungspausen werden im übrigen den Nachrichtenzellen entsprechende Leerzellen übertragen. Die Übertragungsdauer einer Nachrichtenzelle bei einer gegebenen Nachrichtenzellenrate entspricht einem Nachrichtenzellenzyklus.

Die Vermittlungseinrichtung nach Fig 2 vermag Nachrichtenzellen, die auf mit den Eingängen I1..In (für: Input) verbundenen Eingangsleitungen ankommen, über eine herkömmliche Koppeleinrichtung ASN (für: Asynchronous Switching Network) auf mit den Ausgängen O1..On (für: Output) Ausgangsleitungen durchzuschalten. Jedem Ausgang ist ein Wartespeicher OQ1..OQn (für: Output Queue) zugeordnet.

Der Wartespeicher der Multiplexeinrichtung nach Fig 1 und die Wartespeicher der Vermittlungseinrichtung nach Fig 2 dienen der Auflösung von Zugangskonflikten zwischen Nachrichtenzellen, die auf verschiedenen Eingangsleitungen ankommen und die auf dieselbe Ausgangsleitung weitergeleitet werden sollen. Eine weitere Aufgabe ist durch eine Anpassung der Folge der von dem Wartespeicher abgegebenen Nachrichtenzellen an die für die zugehörige Ausgangsleitung eingerichtete Nachrichtenzellenrate gegeben. Die Anzahl der Speicherplätze in dem Wartespeicher bemißt sich nach der maximal zulässigen Anzahl von Nachrichtenzellen zwischen zwei aufeinanderfolgenden Nachrichtenzellen einer virtuellen Verbindung, die eine niedrige Nachrichtenzellenrate und Echtzeitanforderung aufweist. Ist eine virtuelle Verbindung mit niedriger Nachrichtenzellenrate und Echtzeitanforderung, wie zum Beispiel eine Sprachverbindung, gegeben, so weist der Wartespeicher typischerweise eine Anzahl von 90 Speicherplätzen auf.

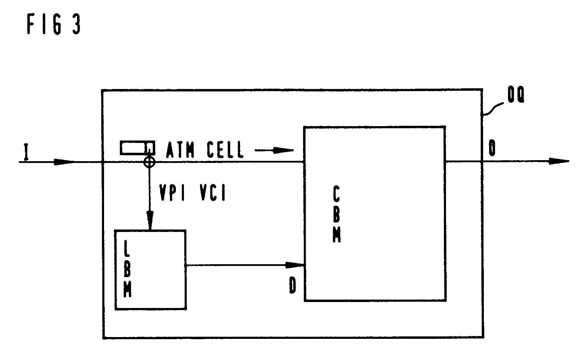

Fig 3 läßt nähere Einzelheiten der Struktur des Wartespeichers erkennen. Von jeder auf einer Eingangsleitung IL (für: Input Line) ankommenden Nachrichtenzelle wird eine Kopie ihrer Zielinformation einer Auswerteeinrichtung LBM (für: Leaky Bucket Manager) zugeführt, während die Nachrichtenzelle einer nicht näher dargestellten Empfangseinrichtung (receiver) einer Speichereinrichtung CBM (für: Cell Buffer Manager) zugeführt wird. In der Auswerteeinrichtung sind für jede augenblicklich eingerichtete virtuelle Verbindung Leaky-Bucket-Größen abgespeichert. Die Leaky-Bucket-Größen betreffen
- eine bei Aufbau der virtuellen Verbindung eingerichtete minimale Nachrichtenzellenübertragungsrate (SBR)
- den augenblicklichen Füllstand SL bzw. NL (für: Slop Level bzw. New Level) des Leaky-Bucket
- den Zeitpunkt der Ankunft LA (für: last arrival) der augenblicklich letzten zur selben virtuellen Verbindung gehörigen Nachrichtenzelle.

Weitere, sämtlichen virtuellen Verbindungen gemeinsame Leaky-Bucket-Größen betreffen
- die einer Nachrichtenzelle entsprechende Zuflußmenge F (für: fill rate) des Leaky-Bucket
- einen maximalen Füllstand C (für:Capacity) des Leaky-Bucket
- den augenblicklichen Zeitpunkt T (für: Time).

Für jede der Auswerteeinrichtung zugeführte Zielinformation wird unter Auswertung der für die zugehörige virtuelle Verbindung abgespeicherten Leaky-Bucket-Größen eine nachstehend näher erläuterte Leaky-Bucket-Procedur durchgeführt. Die Leaky-Bucket-Procedur erbringt einen Verzögerungswert D (für: Delay), der angibt, um wieviele Nachrichtenzellenzyklen die betreffende Nachrichtenzelle verzögert werden würde, wenn sie aus einem der betreffenden virtuellen Verbindung zugehörigen FIFO(First-In-First-Out)-Speicher mit der zugehörigen minimalen Nachrichtenzellenrate auf die Ausgangsleitung weitergeleitet würde. Der Verzögerungswert D gibt also an, zu welchem spätest zulässigen Zeitpunkt, ausgehend von dem augenblicklichen Zeitpunkt, die betreffende Nachrichtenzelle auf die Ausgangsleitung weitergeleitet werden muß.

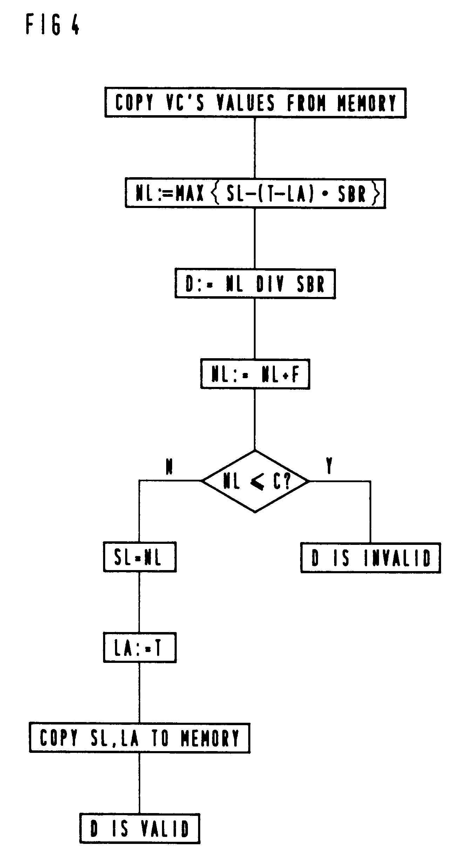

Das Struktogramm nach Fig 4 verdeutlicht die Abläufe in der Auswerteeinrichtung. Für jede ankommende Nachrichtenzelle werden zunächst die Leaky-Bucket-Größen der zugehörigen virtuellen Verbindung aus dem Speicher in die Procedur übernommen. Dann wird ein neuer Füllstand ermittelt, indem der zuletzt abgespeicherte Füllstand um die-seit Ankunft der bislang letzten, zur selben virtuellen Verbindung gehörigen und zur Weiterleitung bestimmten Nachrichtenzelle-Abflußmenge reduziert wird. Aus dem neuen Füllstand wird durch Division mit der minimalen Nachrichtenzellenübertragungsrate der Verzögerungswert D ermittelt. Danach wird der Füllstand um die einer Nachrichtenzelle entsprechende Zuflußmenge erhöht. Der sich dann ergebende Füllstand wird daraufhin untersucht, ob der maximale Füllstand überschritten ist. Ist der maximale Füllstand nicht überschritten (Verzweigung N für: No), so wird der augenblickliche Füllstand und der augenblickliche Zeitpunkt für die betreffende Verbindung abgespeichert. Ist der maximale Füllstand überschritten (Verzweigung Y für: Yes), so wird der für die betrachtete Nachrichtenzelle ermittelte Verzögerungswert auf einen vorgegebenen Wert, beispielsweise ZERO, gesetzt. In beiden Fällen der Verzweigung wird der für die betrachtete Nachrichtenzelle ermittelte Verzögerungswert der Speichereinrichtung zugeführt.

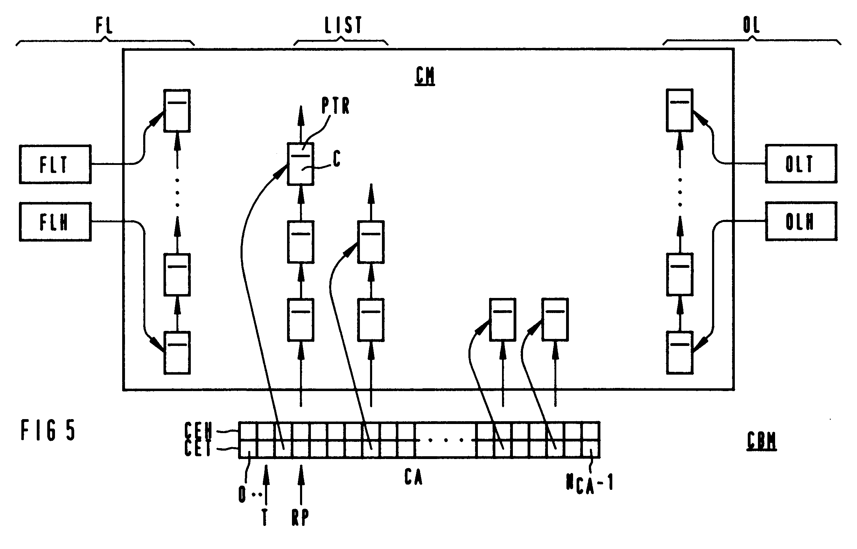

Fig 5 verdeutlicht nähere Einzelheiten der Speichereinrichtung. Ein Nachrichtenzellenspeicher (CM für: Cell Memory) weist eine Vielzahl von z.B. 90 Speicherplätzen auf, die durch individuelle Adressen ansteuerbar sind. Jeder Speicherplatz vermag eine Nachrichtenzelle C (für: cell)und einen Zeiger Ptr (für: Pointer) aufzunehmen. Mit Hilfe der Zeiger Ptr können mehrere Speicherplätze zu einer Liste verbunden werden, wobei der Zeiger Ptr eines Speicherplatzes einen anderen Speicherplatz adressiert. Der Zeiger Ptr in dem jeweils letzten Speicherplatz einer Liste möge eine besondere Adresse, z.B. ZERO, aufweisen und damit das Ende der Liste bezeichnen. Die augenblicklich nicht mit Nachrichtenzellen belegten Speicherplätze sind zu einer Freiliste FL (für: Free List) verbunden, wobei ein Freilistenanfangszeiger FLH (für: FREE LIST HEAD) den ersten Speicherplatz und ein Freilistenendzeiger FLT (für: FREE LIST TAIL) den letzten Speicherplatz adressieren.

Eine Zeitachse CA (für: Calendar) ist mit einer Vielzahl 0..N_{CA-1} von Paaren von Speicherelementen gebildet. Die Vielzahl von Paaren von Speicherelementen möge der Vielzahl von Speicherplätzen gleichen. Die Paare von Speicherelementen werden mit jedem Nachrichtenzellenzyklus fortschreitend durch einen den augenblicklichen Zeitpunkt angebenden Zeitzeiger T (für: present Time) zyklisch angesteuert. Die zyklische Ansteuerung kann beispielsweise mit einem Zähler erfolgen, der zum einen die gleiche Anzahl von Zuständen einzunehmen vermag wie die Anzahl der Paare von Speicherelementen und der zum anderen mit jedem Nachrichtenzellenzyklus inkrementiert wird. In jedem Speicherelement kann die Adresse eines Speicherplatzes abgespeichert sein. Bei jedem Paar von Speicherelementen sind das in Fig 5 in der oberen Zeile dargestellte Speicherelement dem Beginn des Eintrags CEH (für: Calendar Entry Head) und das in Fig 5 in der unteren Zeile dargestellte Speicherelement dem Ende des Eintrags CET (für: Calendar Entry Tail) für den zugehörigen Nachrichtenzellenzyklus zugeordnet.

Wird der Speichereinrichtung für eine in der Empfangseinrichtung zwischengespeicherte Nachrichtenzelle der vorgegebene Wert (z.B: ZERO) zugeführt, so wird diese Nachrichtenzelle verworfen. Wird der Speichereinrichtung für eine in der Empfangseinrichtung zwischengespeicherte Nachrichtenzelle ein von dem vorgegebenen Wert abweichender Verzögerungswert zugeführt, so wird die Nachrichtenzelle wie folgt behandelt.

Die Nachrichtenzelle wird in dem Speicherplatz der Freiliste abgespeichert, den der Freilistenanfangszeiger gerade adressiert. Dieser Speicherplatz wird aus der Freiliste herausgelöst. Ausgehend von dem Zeiger T wird durch Addition des für die betrachtete Nachrichtenzelle ermittelten Verzögerungswertes ein Nachrichtenzellenzyklus bestimmt, der dem spätest zulässigen Zeitpunkt zur Weiterleitung der betrachteten Nachrichtenzelle entspricht. Im allgemeinen wird in dem diesem Nachrichtenzellenzyklus entsprechenden Paar von Speicherelementen die Adresse des Speicherplatzes abgespeichert, in dem sich die betrachtete Nachrichtenzelle befindet. Für den Fall, daß in einem Paar von Speicherelementen bereits die Adresse eines Speicherplatzes abgespeichert ist, so adressiert der Zeiger Ptr des bislang letzten zum selben Nachrichtenzellenzyklus gehörigen Speicherplatzes den Speicherplatz der betrachteten Nachrichtenzelle.

Für den Fall, daß in einem Paar von Speicherelementen bereits die Adresse eines Speicherplatzes abgespeichert ist, so wird die Adresse des Speicherplatzes der betrachteten Nachrichtenzelle zum einen als Zeiger Ptr im Speicherplatz der bislang letzten zum selben Nachrichtenzellenzyklus gehörigen Nachrichtenzelle und zum anderen in dem Speicherelement abgespeichert, das sowohl diesem Nachrichtenzellenzyklus als auch dem Ende des Eintrags CET zugehört. Die Speicherplätze von Nachrichtenzellen, die dem selben Nachrichtenzellenzyklus zugehören, werden also zu einer Liste verbunden. In dem Speicherplatz einer Nachrichtenzelle, die jeweils als bislang letzte einem Nachrichtenzellenzyklus zugeordnet wurde, möge der Zeiger Ptr einen besonderen Wert, z.B. ZERO, aufweisen und damit die bislang letzte Nachrichtenzelle dieses Nachrichtenzellenzyklus' bezeichnen.

Ein Lesezeiger RP (für: Read Pointer)verweist auf das Paar von Speicherelementen, das wenigstens den Speicherplätz einer augenblicklich weiterzuleitenden Nachrichtenzelle adressiert. Der Lesezeiger kann entweder positionsgleich mit dem Zeitzeiger sein oder - wie weiter unten noch näher erläutert werden wird - dem Zeitzeiger vorauseilen.

Speicherplätze von Nachrichtenzellen, die-wie weiter unten noch näher erläutert wird-zur unmittelbaren Weiterleitung bestimmt sind, werden zu einer Ausleseliste OL (für: Output List) verbunden, wobei der Pointer Ptr eines Speicherplatzes auf den jeweils nachfolgenden Speicherplatz verweist. Ein Ausgabelistenanfangszeiger OLH (für: Output List Head) verweist auf den am Anfang der Ausleseliste stehenden Speicherplatz. Ein Ausgabelistenendezeiger OLT (für: Output List Tail) verweist auf den am Ende der Ausleseliste stehenden Speicherplatz. Mit jedem Nachrichtenzellenzyklus wird aus der Ausleseliste-in der Reihenfolge des Eintrags-eine Nachrichtenzelle auf die Ausgangsleitung weitergeleitet.

In der Speichereinrichtung CBM werden in jedem Nachrichtenzellenzyklus die folgenden Proceduren in der gegebenen Reihenfolge ausgeführt.
1) Am Anfang eines jeden Nachrichtenzellenzyklus' wird der Wert des Zeitzeigers incrementiert. Für den Fall, daß in dem augenblicklichen Nachrichtenzellenzyklus eine Nachrichtenzelle auf die Ausgangsleitung weiterzuleiten ist, so wird der zugehörige Speicherplatz an das Ende der Freiliste angefügt. Zum tieferen Verständnis sei erwähnt, daß die Adresse dieses Speicherplatzes bereits im vorangegangenen Nachrichtenzellenzyklus in einer nicht näher dargestellten Übertragungseinrichtung (transmitter) abgespeichert wurde und nicht mehr weiter benötigt wird.
2) Für den Fall, daß eine Nachrichtenzelle ankommt, so wird der für sie ermittelte spätest zulässige Zeitpunkt mit dem Zeitintervall verglichen, das einerseits durch den Zeitzeiger T und andererseits durch den Lesezeiger RP begrenzt ist. Für den Fall, daß der ermittelte Zeitpunkt innerhalb dieses Intervalls liegt, wird der Speicherplatz der betrachteten Nachrichtenzelle unmittelbar an das Ende der Ausleseliste angefügt und die Position des Lesezeigers mit der Position des Zeitzeigers gleichgesetzt. Für den Fall, daß der ermittelte Zeitpunkt einen späteren Zeitpunkt als die augenblickliche Position des Lesezeigers angibt, wird die Adresse des Speicherplatzes der betrachteten Nachrichtenzelle dem Paar von Speicherelementen zugeordnet, das dem erforderlichen Nachrichtenzellenzyklus entspricht.
   Für den Fall, daß während eines Nachrichtenzellenzyklus' mehrere Nachrichtenzellen ankommen, so werden Nachrichtenzellen bis zu einer vorgegebenen Anzahl innerhalb dieses Nachrichtenzellenzyklus' in der Speichereinrichtung abgespeichert. Nachrichtenzellen, die über die vorgegebene Anzahl hinausgehen, werden in dem darauffolgenden Nachrichtenzellenzyklus abgespeichert.
3) Steuert der Zeitzeiger T während des augenblicklichen Nachrichtenzellenzyklus' ein Paar von Speicherelementen an, in denen zumindest auf einen Speicherplatz einer Nachrichtenzelle verwiesen wird, so werden diese Speicherplätze mit der Ausleseliste verbunden und der Eintrag in diesem Paar von Speicherelementen gelöscht.
4) Befindet sich zumindest eine Nachrichtenzelle in der Ausleseliste, so wird die am Anfang der Ausleseliste befindliche Nachrichtenzelle für die Weiterleitung während des nächsten Nachrichtenzellenzyklus' ausgewählt. Befindet sich keine Nachrichtenzelle in der Ausleseliste, so wird der Lesezeiger RP - ausgehend von der augenblicklichen Position des Zeitzeigers T - weitergeschaltet bis er ein Paar von Speicherelementen mit einem Eintrag findet. Findet der Lesezeiger in dem augenblicklichen Nachrichtenzellenzyklus keinen Eintrag, so wird im nächsten Nachrichtenzellenzyklus mit der Suche fortgefahren. Eilt also der Lesezeiger dem Zeitzeiger voraus, so wird für das vom Lesezeiger angesteuerte Paar von Speicherelementen nur eine Nachrichtenzelle - im Fall einer Liste die am Anfang der Liste befindliche Nachrichtenzelle - mit der Ausleseliste verbunden und für die Weiterleitung während des nächsten Nachrichtenzellenzyklus' ausgewählt. Für den Fall, daß es sich bei dieser Nachrichtenzelle um die letzte gehandelt hat, die einem Paar von Speicherelementen zugeordnet ist, so wird der Eintrag in diesem Paar von Speicherelementen gelöscht. Für den Fall, daß sämtliche Paare von Speicherelementen keinen Eintrag aufweisen wird der Lesezeiger mit der Position des Zeitzeigers gleichgesetzt.

## Patentansprüche

1. Verfahren zum statistischen Multiplexen von Nachrichtenzellen
in einer Anordnung,
- bei der eine Mehrzahl von Eingangsleitungen (I1..In) und eine Ausgangsleitung (O) gegeben sind,
- demzufolge ein Nachrichtenzellenzyklus durch die Übertragungsdauer einer Nachrichtenzelle bei einer festgelegten Übertragungsbitrate gegeben ist
- demzufolge Nachrichtenzellen konstanter Länge im Zuge von virtuellen Verbindungen nach einem asynchronen Übertragungsverfahren übertragen werden
- demzufolge in jedem Nachrichtenzellenzyklus auf den Eingangsleitungen eine Mehrzahl von Nachrichtenzellen herangeführt werden können und höchstens eine Nachrichtenzelle auf die Ausgangsleitung weitergeleitet werden kann
- demzufolge für jede virtuelle Verbindung eine minimale Nachrichtenzellenübertragungsrate(SBR) und eine Maximalzahl von die Nachrichtenzellenübertragungsrate überschreitenden Nachrichtenzellen (IBT) eingerichtet werden
**dadurch gekennzeichnet, daß**
- in der Anordnung eine Speichereinrichtung (CM) mit einer Vielzahl von jeweils eine Nachrichtenzelle aufnehmenden Speicherplätzen gegeben ist,
- bei der eine mit einer Vielzahl von Speicherelementen (N_{CM-1}) gebildete Zeitachse (CA) gegeben ist, die durch einen Zeitzeiger (T) mit jedem Nachrichtenzellenzyklus fortschreitend zyklisch angesteuert wird
- demzufolge für jede ankommende Nachrichtenzelle unter Auswertung der für die zugehörige virtuelle Verbindung eingerichteten Größen ein Zeitrang bestimmt wird, der angibt,bis zu welchem spätest zuläßigen Zeitpunkt diese Nachrichtenzelle weitergeleitet werden muß
- demzufolge eine Nachrichtenzelle in einem Speicherplatz abgespeichert wird und die Adresse dieses Speicherplatzes in dem Speicherelement der Zeitachse abgespeichert wird, das dem zugehörigen Zeitrang entspricht
- demzufolge für den Fall, daß in einem durch den Zeitzeiger angesteuerten Speicherelement ein Eintrag auf den Speicherplatz einer Nachrichtenzelle verweist, diese Nachrichtenzelle für eine unmittelbare Weiterleitung auf die Ausgangsleitung in eine Ausleseliste eingetragen wird
- demzufolge für den Fall, daß in dem augenblicklichen Nachrichtenzellenzyklus keine Nachrichtenzelle in die Ausleseliste eingetragen ist ein Lesezeiger(RP) in der Zeitachse bis zu dem Eintrag für eine Nachrichtenzelle mit dem nächstfolgenden Zeitrang fortschreitet und eine Eintragung nur der einen Nachrichtenzelle in die Ausleseliste bewirkt
- demzufolge für den Fall, daß für eine ankommende Nachrichtenzelle ein Zeitrang ermittelt wird, der zwischen den augenblicklichen Positionen des Zeitzeigers und des Lesezeigers liegt, diese Nachrichtenzelle unmittelbar in die Ausleseliste eingetragen wird.

2. Verfahren zum statistischen Multiplexen nach Anspruch 1
demzufolge
- ein Speicherplatz sowohl eine Nachrichtenzelle als auch einen Zeiger (Ptr) aufzunehmen vermag, wobei Nachrichtenzellen zu einer Liste von Speicherplätzen verbunden werden, indem der Zeiger eines Speicherplatzes den Speicherplatz einer anderen Nachrichtenzelle adressiert.

3. Verfahren nach einem der vorstehenden Ansprüche
demzufolge
eine neu ankommende Nachrichtenzelle, die bis zu demselben spätest zuläßigen Zeitpunkt weitergeleitet werden muß wie eine andere, als bislang letzte mit diesem Zeitrang abgespeicherte Nachrichtenzelle, mit der anderen Nachrichtenzelle zu einer Liste mit dem selben Zeitrang verbunden wird, indem im Speicherplatz der anderen Nachrichtenzelle ein Pointer den Speicherplatz der neu angekommenen Nachrichtenzelle adressiert.

4. Verfahren nach einem der vorstehenden Ansprüche
demzufolge
- die Zeitachse für jeden Nachrichtenzellenzyklus ein Paar von Speicherelementen aufweist wobei das eine Speicherelement (CEH) den ersten Speicherplatz und das andere Speicherelement(CET) den letzten Speicherplatz einer Liste zu adressieren vermag

5. Verfahren nach einem der Ansprüche 2 bis 4
demzufolge bei einer Ansteuerung durch den Zeitzeiger eines Paares von Speicherelementen, deren Einträge auf eine Liste von Speicherplätzen verweist, diese Liste in die Ausleseliste eingetragen wird

6. Verfahren nach einem der Ansprüche 2 bis 5
demzufolge augenblicklich nicht benötigte Speicherplätze zu einer Freiliste (FL) verbunden werden

7. Verfahren nach einem der vorstehenden Ansprüche,
das in einer Multiplexeinrichtungeinrichtung eingesetzt wird, die auf einer oder mehreren Eingangsleitungen zugeführte Nachrichtenzellen verschiedener virtueller Verbindungen auf nur eine Ausgangsleitung durchzuschalten vermag

8. Verfahren nach einem der vorstehenden Ansprüche 1 bis 6, das an einem Ausgang einer Vermittlungseinrichtung eingesetzt wird, die auf verschiedenen Eingangsleitungen ankommende Nachrichtenzellen verschiedener virtueller Verbindungen auf Ausgangsleitungen durchzuschalten vermag

9. Verfahren nach einem der vorstehenden Ansprüche,
demzufolge die Summe der mittleren Nachrichtenzellenraten sämtlicher augenblicklich eingerichteter virtuellen Verbindungen allenfalls so groß ist, wie die maximale Nachrichtenzellenrate der Ausgangsleitung.
